(19) Europäisches Patentamt
European Patent Office
Office européen des brevets

(11) Veröffentlichungsnummer: **0 105 133**
**B1**

# (12) EUROPÄISCHE PATENTSCHRIFT

(45) Veröffentlichungstag der Patentschrift: **28.10.87**

(51) Int. Cl.[4]: **C 08 L 95/00**

(21) Anmeldenummer: **83107765.6**

(22) Anmeldetag: **06.08.83**

## (54) Verfahren zur Herstellung von Organosilan-haltigen Asphaltmassen.

(30) Priorität: **01.10.82 DE 3236381**

(43) Veröffentlichungstag der Anmeldung: **11.04.84 Patentblatt 84/15**

(45) Bekanntmachung des Hinweises auf die Patenterteilung: **28.10.87 Patentblatt 87/44**

(84) Benannte Vertragsstaaten: **AT BE CH DE FR GB IT LI NL SE**

(56) Entgegenhaltungen:
**FR - A - 2 102 794**
**US - A - 2 609 305**
**US - A - 4 036 661**
**US - A - 4 173 489**

(73) Patentinhaber: **Degussa Aktiengesellschaft, Weissfrauenstrasse 9, D-6000 Frankfurt am Main 1 (DE)**

(72) Erfinder: **Müller, Karl Hans, Dr., Robert-Koch-Strasse 17, D-6457 Bruchköbel (DE)**
Erfinder: **Barthel, Walter, Gartenstrasse 7, D-6456 Langenselbold (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein Verfahren zur Herstellung von Organosilan-haltigen Asphaltmassen, die für die Aufbringung zum Beispiel als Strassenbelag geeignet sind.

Organosilan-haltige Asphaltmassen sind aus verschiedenen Druckschriften bekannt.

Die DE-A-30 28 365 betrifft bituminöse Bindemittel, die mindestens ein Organosilan enthalten. Sie werden durch Einrühren des Organosilans in das auf 120 bis 230 °C erhitzte und so verflüssigte Bitumen hergestellt.

In der US-A-4 036 661 werden Organosilan-haltige Asphaltmassen beschrieben. Auch in diesem Fall erfolgt zuerst die Zugabe des Silans zu dem geschmolzenen Bitumen, das anschliessend mit mineralischen Bestandteilen zu einem als Strassenbelag geeigneten Asphalt vermischt wird.

Der US-A-4 036 661 ist auch der Hinweis zu entnehmen, dass die mineralischen Bestandteile vor dem Vermischen mit Bitumen mit der Lösung eines Organosilans behandelt werden können. Wegen der Umweltbelastung und der erhöhten Feuergefahr, die durch die Lösungsmittel hervorgerufen werden kann, bleibt es bei der theoretischen Erörterung dieser Verfahrensvariante.

Der Zweck der Organosilanzugabe besteht in allen Fällen darin, die Haftung zwischen dem Bitumen und den mineralischen Bestandteilen des Asphalts zu erhöhen.

Die bekannten Verfahren weisen jedoch den Nachteil auf, dass das Organosilan dem heissen Bitumen zugesetzt werden muss. Dies führt zu einer langen thermischen Belastung der Silane, die je nach Stoffeigenschaften Substanzverlust und Umweltbelästigung durch Verdampfen oder Zersetzen der Silane zur Folge haben können.

Aufgabe der Erfindung ist es, ein Verfahren zur Herstellung von Organosilan-haltigen Asphaltmassen zu finden, das diese Nachteile nicht aufweist.

Gegenstand der Erfindung ist ein Verfahren zur Herstellung von Organosilan-haltigen Asphaltmassen, dadurch gekennzeichnet, dass man ein Gemisch, das aus mindestens einem Organosilan und Russ besteht, mit mineralischen Bestandteilen vermengt und dieses Gemenge anschliessend mit flüssigem Bitumen vermischt.

Die mineralischen Bestandteile bestehen aus den Materialien, wie sie, nach Kornklassen in Splitte (2–32 mm Körnung), Brechsand (0,09–2 mm) und Füller ($\leq$0.09 mm) aufgeteilt, nach den technischen Vorschriften der Baubehörden zur Herstellung von Asphaltbelägen dem Bitumen beigemischt werden.

Die Vermengung eines pulverförmigen Organosilan/Russ-Gemisches, das 30 bis 60 Gew.%, bevorzugt 47–53 Gew.%, von mindestens einem Organosilan, bezogen auf die Gesamtmenge, enthält, ist besonders geeignet für die Herstellung von Asphaltmassen. Die Präparation eines derartigen Gemisches kann analog dem in der DE-C-2 747 277 beschriebenen Verfahren vorgenommen werden. Das Organosilan/Russ-Gemisch kann wahlweise erst mit einem Bestandteil, bevorzugt mit dem Füller, oder aber auch gleich mit der gesamten Mineralstoffmenge vermengt werden.

Dabei wird die Menge des Organosilan/Russ-Gemisches immer so bemessen, dass die Konzentration des Organosilans, bezogen auf die Asphaltmasse, zwischen 0,005 und 0,09 Gew.% liegt.

Besonders geeignet sind pulverförmige Gemische, die ein oder mehrere Silane der Formel

(I) $(Z-Alk)_m-S_nH_{(2-m)}$

enthalten, in welcher bedeutet:

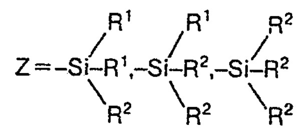

mit

$R^1$ = Alkyl mit 1 bis 4 C-Atomen

$R^2$ = Alkoxy mit 1 bis 4 C-Atomen,

Alk = zweiwertiger, gesättigter aliphatischer Kohlenwasserstoff mit 1 bis 4 C-Atomen,

m = 1 oder 2 und

n = 1; bis 6 bei m = 2.

Von diesen Silanen bevorzugt eingesetzt werden die Verbindungen

Bis–(3–[triäthoxisilyl]–propyl) —sulfan / —disulfan / —tetrasulfan.

Eine besondere Eignung für den erfindungsgemässen Zweck zeigen auch pulverförmige Konzentrate, die ein oder mehrere Silane der Formel

(II) $[(NH_2)_a-R^3-H_{(2-a)}]_p-Si(OR^1)_{(4-p)}$

enthalten, in welcher bedeuten

$R^1$: Alkyl mit 1 bis 4 C-Atomen,

$R^3$: dreiwertiger, gesättigter, aliphatischer Kohlenwasserstoff mit 1 bis 4 C-Atomen,

a = 1 oder 2 und

p = 1 oder 2.

Die erfindungsgemässen Organosilan-haltigen Asphaltmassen können abhängig von der Art und Menge des Mineralgemisches zur Herstellung von Walzasphalt für den Srassenbau und dort auch zur Herstellung von Sonderbelägen, wie z. B. für Brükken verwendet werden.

Ebenso können sie für die Herstellung von Gussasphalt für Strassenbau oder Hochbau (z. B. Industriefussboden und Estriche) oder die Herstellung von Dachbeschichtungen, Dachbahnen, Unterbodenschutz für Fahrzeuge oder Kabelmassen verwendet werden.

Aufgrund der Einarbeitung des oder der Organosilane in das Mineralstoffgemenge, das anschliessend mit dem heissen Bitumen vermischt wird, ergibt sich eine erhebliche zeitliche Verkürzung der thermischen Belastung der verarbeiteten Silane gegenüber dem Stand der Technik. Weiterhin sind auch kaum noch Verdampfungsverluste zu registrieren, da ein auf dem Russ adsorbiertes Organosilan nicht so leicht verdampft wie ein flüssiges Silan, das in das heisse Bitumen eingerührt wird.

Die geringere thermische Belastung lässt die wirtschaftliche Verwendung auch von Organosilanen zu, die gemäss den Verfahren nach dem Stand der Technik nur unter hohen Substanzverlusten in Bitumen zu verarbeiten waren.

Überraschenderweise zeigt sich auch eine deutliche Verbesserung der Wirkung der erfindungsgemäss eingesetzten Gemische aus Organosilan und anorganischem Feststoff. Es ist festzustellen, dass z.B. zur Erzielung von fast gleichen Spaltzugfestigkeiten erfindungsgemäss nur die Hälfte der Organosilanmenge benötigt wird, die gemäss Stand der Technik in das heisse Bitumen eingearbeitet werden muss.

Zur Erläuterung der Erfindung sind die folgenden Beispiele angeführt.

Hergestellt wird ein splittreicher Asphaltbeton 0/11, dessen Bindemittelgehalt so gewählt ist, dass sich ein Hohlraumgehalt in der Grössenordnung von 7 Vol.% am Marshallprobekörper ergibt. Unter Verwendung von 5,4 Gew.% Strassenbaubitumen 80 ergibt sich folgende Art der Dosierung für den splittreichen Asphaltbeton 0/11:

Brechsand und Feinsplitt bis 5 mm Korngrösse bestehen aus einer quarzitischen Grauwacke aus dem Raum Osnabrück. Als sehr saurer Gesteinstyp führt er zu Problemen bei der Haftung des Bindemittelfilms auf der Gesteinsoberfläche.

| | Dosierung (Gew.%) | | resultierend (Gew.%) |
|---|---|---|---|
| Bindemittelgehalt | 5,4 | | 5,4 |
| Bindemittelart | B80 | | B80 |
| Füller | | | |
| Kalksteinmehl | | | |
| Hehlen | 7,0 | Füller ⩽0,09 | 7,8 |
| Quarzitbrechsand | | 0,09/0,25 | 8,3 |
| | | 0,25/0,71 | 14,0 |
| ⩽0,09 | 1,5 | 0,71/2 | 20,0 |
| 0,09–0,25 | 7,6 | 2/5 | 22,0 |
| 0,25–0,71 | 14,0 | 5/8 | 13,9 |
| 0,71–2 | 20,0 | 8/11 | 14,0 |
| Quarzitsplitt | | | |
| 2–5 | 22,0 | | |
| 5–8 | 13,9 | | |
| 8–11 | 14,0 | | |

Nach der gekennzeichneten Zusammensetzung werden Marshallprobekörper hergestellt, deren Hohlraumgehalt bedingungsgemäss in einer Grössenordnung von 7 Vol.% liegen soll. An den Marshallprobekörpern wird die Spaltzugfestigkeit ermittelt.

Eine ungünstige Affinität zwischen Gesteinsoberfläche und Bitumen wird bei der Wasserlagerung dadurch deutlich , dass sich ein Wasserfilm zwischen Bindemittelhaut und Gesteinsoberfläche schiebt, die Spaltzugfestigkeit verringert und sich zum Teil auch durch Vergrösserung des Volumens der Probekörper bemerkbar macht.

Der Spaltzugversuch wurde auf einer Universalpresse der Prüfklasse I mit einer konstanten Vorschubgeschwindigkeit von 50 mm/min bei einer Prüftemperatur von 25 °C durchgeführt. Dabei ergibt sich die Spaltzugfestigkeit aus der zahlenwertgleichung:

$$\beta_{sz} = \frac{2P}{.d.h}$$

darin bedeuten P = max. Druckkraft in N, d = Durchmesser des Probekörpers in mm, h = Höhe des Probekörpers in mm.

Die Untersuchungsergebnisse sind nachstehend in der Tabelle 1 angegeben. Die Tabelle enthält den Haftmitteltyp, die Dosierung bezogen auf den Bindemittelgehalt in Gew.% die Art der Zugabe in Variation einer Zugabe zum Bitumen oder zu dem Mineralstoffgemisch.

Als Silan findet das Bis-(3-triäthoxisilyl-propyl) tetrasulfan (Si 69) bzw. eine handelsübliche pulverförmige Abmischung, die zu je 50 Gew.% aus Si 69 und Russ besteht, Verwendung, d.h. dass 0,5 Gew.% X 50S einem Si 69-Anteil von 0,25 Gew.% entsprechen.

Versuch 1 dient als Vergleichsversuch ohne Einsatz eines Silans.

Es zeigt sich, dass die Asphaltmasse mit 0,5 Gew.% X50S im Mineralstoffgemisch fast die gleiche Verminderung des Spaltzugwertes zeigt wie die, bei der 0,5 Gew.% Si 69 direkt dem heissen Bitumen untergemischt wurden.

Tabelle 1

| Versuch Nr. | | 1 | 2 | 3 | 4 |
|---|---|---|---|---|---|
| Haftmittel | | – | Si 69 | Si 69 | X 50 S |
| Dosierung | | – | 0,25 | 0,5 | 0,5 |
| Zugabe zu | | – | Bitumen | Bitumen | Mineralstoffgemisch |
| $\beta_{sz}$(N/mm²) | | | | | |
| ohne Beanspruchung | | 0,86 | 0,86 | 0,86 | 0,86 |
| nach Wasser- | 48 h | 0,45 | 0,68 | 0,68 | 0,81 |
| lagerung | 192 h | 0,30 | 0,63 | 0,64 | 0,71 |
| bei 40 °C | 768 h | 0,18 | 0,59 | 0,66 | 0,65 |
| Verminderung | | | | | |
| $\beta_{sz}$ (%) | 48 h | −47,7 | −20,9 | −20,9 | − 5,8 |
| | 192 h | −66,1 | −26,7 | −25,6 | −17,4 |
| | 768 h | −79,1 | −31,4 | −23,3 | −24,0 |

**Patentansprüche**

1. Verfahren zur Herstellung von Organosilan-haltigen Asphaltmassen, dadurch gekennzeichnet, dass man ein Gemisch, das aus mindestens einem Organosilan und Russ besteht, mit mineralischen Bestandteilen vermengt und dieses Gemenge anschliessend mit flüssigem Bitumen vermischt.

2. Verfahren nach Anspruch 1, dadurch gekennzeichnet, dass man ein Gemisch aus 30 bis 60 Gew.% mindestens eines Organosilans und 70 bis 40 Gew.% Russ einsetzt.

3. Verfahren nach den Ansprüchen 1 bis 2, dadurch gekennzeichnet, dass man ein feinteiliges Gemisch einsetzt, das mindestens ein Organosilan der Formel

(I) $(Z\text{–}Alk)_m S_n H_{2-m}$

enthält,

in welcher bedeuten:

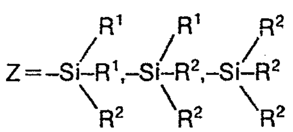

mit

$R^1$ = Alkyl mit 1 bis 4 C-Atomen

$R^2$ = Alkoxy mit 1 bis 4 C-Atomen.

Alk: zweiwertiger, gesättigter aliphatischer Kohlenwasserstoff mit 1 bis 4 C-Atomen

m: 1 oder 2 und

n = 1; bis 6 bei m = 2.

4. Verfahren nach den Ansprüchen 1 bis 2, dadurch gekennzeichnet, dass man ein feinteiliges Gemisch einsetzt, das mindestens ein Organosilan der Formel

(II) $[(NH_2)_a\text{–}R^3\text{–}H_{(2-a)}]_p\text{–}Si(OR^1)_{(4-p)}$

enthält, in welcher bedeuten:

$R^1$: Alkyl mit 1 bis 4 C-Atomen

$R^3$: einen dreiwertigen, gesättigten, aliphatischen Kohlenwasserstoffrest mit 1 bis 4 C-Atomen,

a = 1 oder 2 und

p = 1 oder 2.

**Claims**

1. A process for the production of an organosilane-containing asphalt composition, characterised in that a mixture composed of at least one organosilane and carbon black is blended with mineral constituents and this blend is subsequently mixed with liquid bitumen.

2. A process according to claim 1, characterised in that a mixture of from 30 to 60% by weight of at least one organosilane and from 70 to 40% by weight of carbon black is used.

3. A process according to claims 1 to 2, characterised in that a finely divided mixture is used, which contains at least organosilane corresponding to the formula

(I) $(Z\text{–}Alk)_m S_n H_{2-m}$

in which

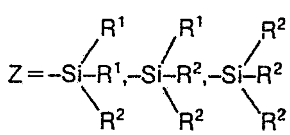

with

$R^1$ = Alkyl containing from 1 to 4 carbon atoms

$R^2$ = Alkoxy containing from 1 to 4 carbon atoms

Alk represents divalent saturated aliphatic hydrocarbon containing from 1 to 4 carbon atoms

m represents 1 or 2 and

n = 1 to 6 when m = 2.

4. A process according to claims 1 to 2, characterised in that a finely divided mixture is used which contains at least one organosilane corresponding to formula

(II) $[(NH_2)_a-R^3-H_{(2-a)}]_p-SI(OR^1)_{(4-p)}$

in which

$R^1$ represents alkyl containing from 1 to 4 carbon atoms

$R^3$ represents a trivalent saturated aliphatic hydrocarbon radical containing from 1 to 4 carbon atoms,

a represents 1 or 2 and

p represents 1 or 2.

**Revendications**

1. Procédé pour la préparation de masses asphaltiques contenant des organosilanes, caractérisé en ce qu'il est mélangé à des composants minéraux une composition qui est constituée d'au moins un organosilane et de noir de fumée, et cette composition est ensuite mélangée avec du bitume liquide.

2. Procédé selon la revendication 1, caractérisé en ce qu'il est utilisé un mélange constitué de 30 à 60% en poids d'au moins un organosilane et de 60 à 40% en poids de noir de fumée.

3. Procédé selon les revendications 1 et 2, caractérisé en ce qu'il est utilisé un mélange finement divisé qui contient au moins un organosilane de formule:

$$(Z-Alk)_mS_nH_{2-m} \quad (I)$$

dans laquelle:

Z représente

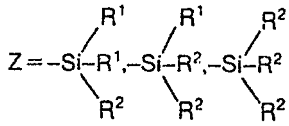

$R^1$ représente un groupe alkyle ayant de 1 à 4 atomes de carbone,

$R^2$ représente un groupe alcoky ayant de 1 à 4 atomes de carbone,

Alk représente un hydrocarbure aliphatiques saturé bivalent ayant de 1 à 4 atomes de carbone,

m est 1 ou 2, et

n = 1, jusqu'à 6 lorsque m = 2.

4. Procédé selon les revendications 1 et 2, caractérisé en ce qu'il est utilisé un mélange finemet divisé qui contient au moins un organosilane de formule:

$$[(NH^2)_a-R^3-H_{(2-a)}]_p-Si(OR^1)_{(4-p)} \quad (II)$$

dans laquelle:

$R^1$ représente un groupe alkyle ayant de 1 à 4 atomes de carbone,

$R^3$ représente un reste hydrocarbure aliphatique saturé trivalent ayant de 1 à 4 atomes de carbone,

a = 1 ou 2, et

p = 1 ou 2.